# EUROPÄISCHE PATENTSCHRIFT

(11) **EP 1 443 262 B1**
(45) Veröffentlichungstag und Bekanntmachung des Hinweises auf die Patenterteilung: **23.04.2008**
(21) Anmeldenummer: 04000834.4
(22) Anmeldetag: 16.01.2004
(51) Int. Cl.: F16P 1/00

(54) **Profilkörper für Rahmenkonstruktionen und Verwendung des Profilkörpers in einer Verkleidung**
Profile member for frames constructions and use of the profile member in a fairing
Elément profilé pour constructions à cadres et utilisation de l'élément profilé dans un capotage

(30) Priorität: 01.02.2003 DE 10304041
(43) Veröffentlichungstag der Anmeldung: 04.08.2004
(73) Patentinhaber: Kolbus GmbH & Co. KG, 32369 Rahden (DE)
(72) Erfinder: Koob, Stefan, 31603 Diepenau (DE); Reindl, Lucian, 50999 Köln (DE); Schreiber, Stefan, 50677 Köln (DE)

(56) Entgegenhaltungen:
- EP-A- 1 057 962
- AT-B- 281 381
- DE-A1- 2 948 971
- FR-A- 1 179 116
- FR-A- 1 564 520
- GB-A- 1 489 278
- GB-A- 2 045 856
- GB-A- 2 083 342
- US-A- 2 664 332
- US-A- 3 271 920

## Beschreibung

Die vorliegende Erfindung bezieht sich auf einen aus Leichtmetall bestehenden Profilkörper für Rahmenkonstruktionen gemäß dem Oberbegriff des Anspruchs 1 und auf eine Verkleidung für eine Bearbeitungsmaschine, z.B. eine Buchbindemaschine, gemäß dem Oberbegriff des Anspruchs 9 unter Verwendung des Profilkörpers.

Verkleidungen dienen als trennende Schutzeinrichtungen, um Personen vor Gefährdungen zu schützen, die z.B. durch bewegte Funktionsteile oder unter elektrischer Spannung stehende Bauteile entstehen. Insbesondere bei Maschinen der Druckweiterverarbeitung ist eine uneingeschränkte Beobachtung des Arbeitsablaufes notwendig, sodass die Verkleidungen häufig mit Drahtgitter und transparentem Material (z.B. Acrylglas) ausgeführt werden, die zur Verbesserung der Formbeständigkeit in einem Metallrahmen eingefasst sind.

Für das Rüsten und Instandhalten und ähnliche Tätigkeiten werden die Verkleidungen im Maschinengestell verschieb- oder schwenkbar gelagert. Aus Gewichtsgründen haben sich Rahmenkonstruktionen aus stranggepressten Profilkörpern bewährt, die zur Aufnahme insbesondere eines Randbereichs eines Flächenelements mindestens eine in Profillängsrichtung verlaufende Aufnahmenut aufweisen. Zur Erzeugung einer gekrümmt oder gewölbt ausgeführten Verkleidung oder zur Ausprägung einer Längserstreckung sind Rahmenkonstruktionen aus Profilkörpern bekannt, in denen die Profilkörper als untere und obere Rahmenteile mit an den offenen Stirnseiten der Profilkörper durch Eindrehen von selbstschneidenden Schrauben in Schraubkanälen befestigten Seitenwangen verbunden sind.

Aufgrund ihres designbestimmenden Charakters werden die Profilkörper in einer bestimmten Orientierung an der Bearbeitungsmaschine angeordnet. Da außerdem die Orientierung des Flächenelements im Bereich seines in der Aufnahmenut aufgenommenen Randbereiches festliegt, ist eine variable Gestaltung von Verkleidungen mit ein und demselben Profilkörper nicht möglich. Lediglich der Krümmungsradius der Verkleidung kann variiert werden, jedoch nicht die Aufnahme der Flächenelemente im Profilkörper unter verschiedenen Winkeln, womit sich flache und steile Verkleidungen gegenseitig ausschließen.

Aus der GB 2 045 856 A ist ein aus Leichtmetall bestehenden Profilkörper bekannt, der mit mehreren longitudinalen, teilweise von der Seitenfläche des Profilkörpers zugänglichen Hohlräumen ausgebildet ist. Die in den vier Ecken des Profilkörperquerschnitts angeordneten Hohlräume weisen jeweils einen kreisrunden Querschnitt gleichen Durchmessers auf, wobei die Nuten zur jeweiligen Ecke hin über etwa 90° ihres Kreisquerschnittes geöffnet sind, zur Ausbildung von hinterschnittenen Längsnuten. Sie dienen der Aufnahme von zylindrischen Nutensteinen, wodurch weitere Elemente, wie z.B. Flächenelemente, mit dem Profilkörper verbindbar sind. Die zylindrischen Nutensteine bilden mit den Längsnuten Zylindergelenke mit einem begrenzten Schwenkbereich und einer Verschieberichtung in Richtung der Drehachse. Die zylindrischen Nutensteine sind mittels Abdrückschrauben am Profilkörper festlegbar. Eine unmittelbare, direkte Aufnahme eines am Fußende keinen spezifischen Querschnitt aufweisenden Flächenelements in den Längsnuten ist nicht vorgesehen. Stattdessen ist ein spezieller, in seinem Profilquerschnitt an die hinterschnittene Längsnut angepasster Nutenstein erforderlich.

DE 29 48 971 A1 hat eine Verbindungsvorrichtung für Flächenkonstruktionselemente zum Inhalt. Offenbart ist ein Profilkörper mit an seiner Außenseite angeordneten, hinterschnittenen Profillängsnuten und mit im Querschnitt an die Hinterschneidung angepassten, bogenförmigen Eingriffsprofilen, welche in die im Bereich der Hinterschneidungen von Kreisbögen flankenseitig begrenzten Profillängsnuten einführbar und an den Stirnseiten der Flächenkonstruktionselemente befestigbar sind. Die Flächenelemente sind auch hier nicht direkt in den Längsnuten des Profilkörpers aufgenommen.

Der vorliegenden Erfindung liegt nun die Aufgabe zugrunde, einen Profilkörper für Rahmenkonstruktionen gemäß dem Oberbegriff des Anspruchs 1 derart auszugestalten, dass sich ein breites Gestaltungsspektrum für eine montage- und kostengünstige Konstruktion von Verkleidungen gemäß dem Anspruch 9 ergibt.

Diese Aufgabe löst der vorgeschlagene Profilkörper dadurch, dass er die im Kennzeichen des Patentanspruchs 1 umschriebenen Merkmale aufweist. Die abhängigen Patentansprüche 2 bis 8 definieren bevorzugte Ausführungsformen des Profilkörpers. Die erfindungsgemäße Verkleidung, in der der Profilkörper Verwendung findet, weist außerdem die im Kennzeichen des Patentanspruchs 9 definierten Merkmale auf. Bevorzugte Ausbildungsformen der Verkleidung sind in den nachfolgenden Patentansprüchen angegeben.

Mit der außenseitig durch zueinanderweisende, abgerundete Profilzungen eingeengten Aufnahmenut können die Flächenelemente unter verschiedenen Winkeln zu einer Profilbezugsachse geneigt in den Profilkörper aufgenommen werden. Der Winkelbereich ist bestimmt durch die jeweilige Anlage des Flächenelements an den Innenseiten der Profilzungen, wobei die Flächenelemente dann noch frei aus dem Profilkörper heraustreten. Es ergibt sich ein theoretischer Drehpunkt des Flächenelements, der ungefähr in der Mitte zwischen den beiden abgerundeten Profilzungen liegt. Der oder die Krümmungsmittelpunkte der gekrümmte Bodenfläche der Aufnahmenut fallen ungefähr mit diesem Drehpunkt zusammen, mit dem Vorteil einer annähernd gleichen Aufnahmelänge des Flächenelements in der Aufnahmenut in den verschiedenen Winkelstellungen. Mit dem erfindungsgemäßen Profilkörper können sowohl steile als auch flache Verkleidungen geschaffen werden, wobei die jeweiligen oberen bzw. unteren Profilkörper identisch ausgerichtet sind. Durch die multifunktionelle Ausgestaltung des Profilkörpers werden vielfältige Gestaltungen und Anwendungen der Verkleidungen ermöglicht.

Zweckmäßig ist die Ausbildung wenigstens einer ebenen, als Anschlagfläche der Verkleidung für die Schließstellung dienenden Außenfläche am Profilkörper, die mit einer Längsnut zur Aufnahme eines strangförmigen Pufferprofils zum Dämpfen und Abdichten versehen ist. Das manuelle Öffnen und Schließen der Verkleidung erfolgt in einfacher Weise durch die Ausbildung eines von außen durch Erfassen zugänglichen Hohlraums im Profilkörper, wodurch bei einigen Verkleidungskonstruktionen zusätzlich anzubringende Handgriffe in Fortfall gelangen können. Vorteilhaft ist, wenn dieser Hohlraum einen im Wesentlichen kreisförmigen Querschnitt aufweist und somit zur Führung eines runden Gegenstands geeignet ist. Dieser kann zur Ausbildung eines Drehpunktes für die Verkleidung genutzt werden oder es können relativ zum Rahmen bewegte Teile in der Verkleidung integriert werden.

Eine besondere Ausführungsform des Profilkörpers ist im Anspruch 5 angegeben. Der Profilkörper umfasst einen innerhalb und unmittelbar hinter dem Außenprofil liegenden Nutensteinkanal, der durch Einbringen von Bohrungen in die Außenfläche des Profilkörpers für Befestigungen mit Klemmteilen nutzbar ist und eine größere Befestigungssicherheit bietet als in die Außenfläche eingebrachte Gewindebohrungen. Vorteilhaft ist die Ausbildung eines innenliegenden Nutensteinkanals, der zum Außenprofil beabstandet ist. Beim Anbohren im Befestigungsfall werden wenigstens zwei Profilwände durchbohrt, wodurch sich eine vergrößerte Führungslänge ergibt. Zweckmäßig ist, wenn dieser Nutensteinkanal in einem von außen zugänglichen Hohlraum ausgebildet ist. Hierdurch werden auch noch im eingebauten Zustand des Profilkörpers Befestigungen ermöglicht. Mit einer halbeiförmigen Ausbildung der Außenkontur ist ein ergonomisches Erfassen des Profilkörpers mit der durch den Daumen gegenüber den übrigen Fingern geöffneten Hand gewährleistet.

Die erfindungsgemäße Verkleidung, in der der Profilkörper Verwendung findet, ist durch das Einspannen der seitlichen Randbereiche des Flächenelements zwischen einem in der Seitenwange ausgebildeten Absatz und wenigstens einem punktuell angeordneten, elastischen Klemmelement besonders montage- und kostengünstig gestaltet. In den Seitenwangen können, da nur ein Absatz hergestellt werden muss, beliebig gestaltete Konturen für die Verkleidung eingeprägt werden. Hierdurch ergeben sich viele Möglichkeiten für eine formgerechte und funktionale Gestaltgebung. Ein ansprechendes Design ergibt sich zudem dadurch, dass das Flächenelement ohne die Verwendung eines Dichtprofils gegen den Absatz in den Seitenwangen geklemmt wird und sich die seitlichen Rahmenteile nur unwesentlich gegenüber den Flächenelementen erheben.

Mit dem Vorteil der Steifigkeitserhöhung der Verkleidung und dem Vorteil des lückenlosen Anliegens wird das Flächenelement durch mehrere, in ungefähr gleichen gegenseitigen Abständen zueinander angeordnete Klemmelemente gegen den Absatz eingespannt. Das Klemmelement ist vorzugsweise als handelsüblicher runder Puffer ausgebildet und wirkt, stirnseitig an der innenliegenden Seitenfläche der Seitenwange befestigt, mit seiner Mantelfläche gegen das Flächenelement. Schwankende Flächenelementdicken sind kompensierbar und der Austausch eines Flächenelements gegen eines anderer Dicke wird durch die Verwendung von Puffern mit anderem Durchmesser ermöglicht. In gleicher Weise vorteilhaft ist, dass die in der longitudinalen Aufnahmenut der Profilkörper aufgenommenen Randbereiche des Flächenelements mit einem elastischen Fassungsprofil versehen sind.

Eine weitere bevorzugte Ausbildungsform ist im Anspruch 13 mit der Ausbildung einer gewölbten Verkleidung angegeben, die sich allein daraus ergibt, dass das an sich ebene Flächenelement nach dem Einsetzen in den Rahmen durch die Kontur des Absatzes in den Seitenwangen in eine gewölbte Form gezwungen wird. Die Verkleidung erfährt insbesondere dadurch eine weitere Aussteifung. Exakt ausgebildete Knicke in der Verkleidung werden hierbei zweckmäßig durch vorheriges Abkanten des Flächenelements geschaffen. Die Wölbung selbst ist vorzugsweise als Radius definiert.

Die Erfindung wird nachfolgend unter Bezugnahme auf die Zeichnung anhand von zwei Verkleidungsausführungen näher erläutert.
- **Fig. 1**: zeigt in perspektivischer Darstellung eine im wesentlichen flache Verkleidung in geschlossener Stellung.
- **Fig. 2**: zeigt die Verkleidung aus Fig. 1 in geöffneter Stellung.
- **Fig. 3**: zeigt eine steile Verkleidung mit einem Gitter als Flächenelement.
- **Fig. 4**: zeigt die Verkleidung aus Fig. 1 im Schnitt gemäß dem Schnittverlauf IV-IV.
- **Fig. 5**: zeigt den unteren Bereich der Verkleidung aus Fig. 3 im Schnitt gemäß dem Schnittverlauf V-V.

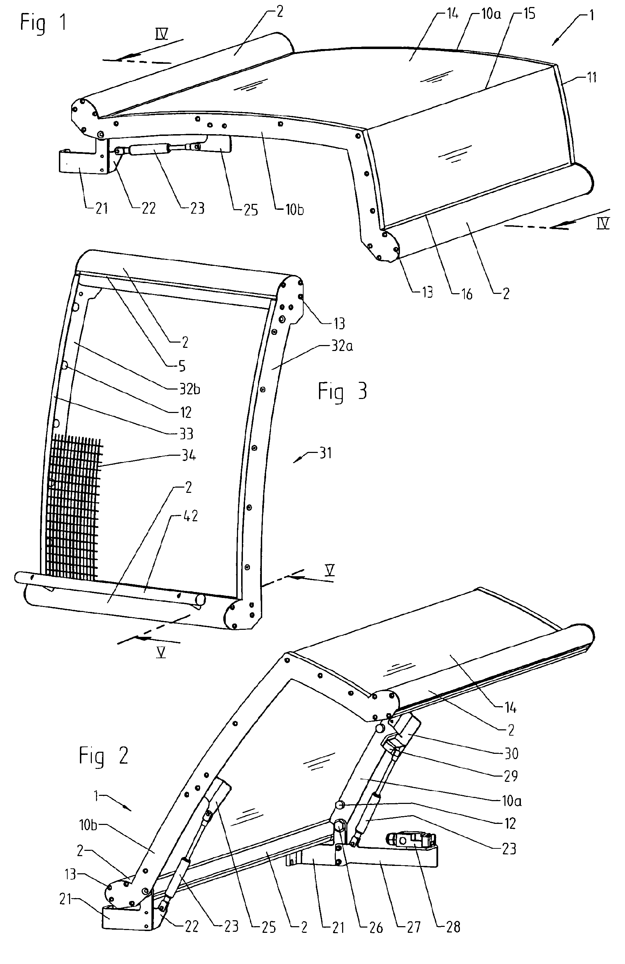

Die Fig. 1 stellt eine Verkleidung 1 dar, die als vormontierte Baueinheit in eine hier nicht näher dargestellte Buchbindemaschine eingesetzt werden kann. Sie ist als Schwenkhaube ausgebildet und hat ein im Wesentlichen flaches Erscheinungsbild, obwohl ein vorderer Teil der Verkleidung 1 steil nach unten abgeknickt ist. Die Verkleidung 1 umfasst einen Rahmen, der gebildet ist aus einem oberen und einem unteren, aus Leichtmetall stranggepressten Profilkörper 2 mit mehreren longitudinalen, teilweise von der Seitenfläche des Profilkörpers 2 zugänglichen und teilweise als Schraubkanal 4 ausgebildeten Hohlräumen 3, und aus linken und rechten Seitenwangen 10a,b, die an den offenen Stirnseiten des Profilkörpers 2 durch Eindrehen von selbstschneidenden Schrauben 13 in den Schraubkanälen 4 befestigt sind.

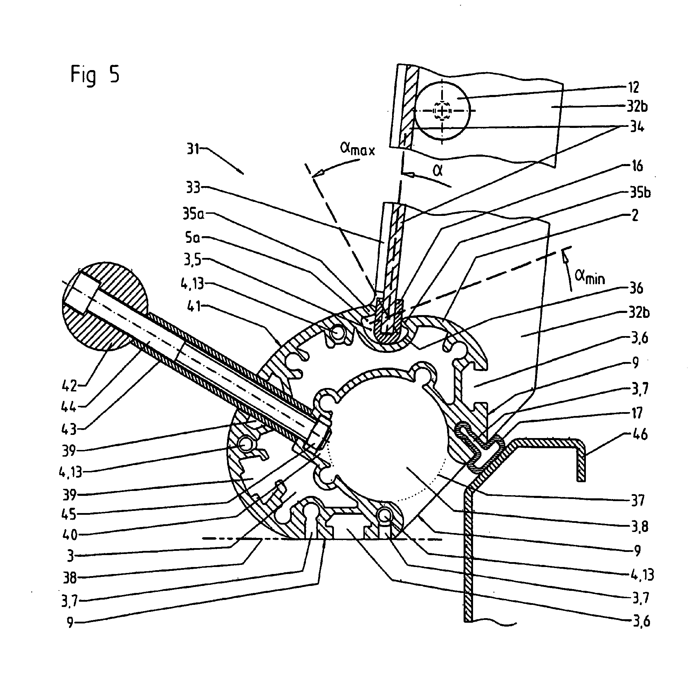

In den Rahmen ist als Flächenelement eine Kunststoffscheibe 14 aus Polycarbonat eingesetzt. Der Profilkörper 2 weist für die Aufnahme der oberen und unteren Randbereiche der Kunststoffscheibe 14 eine Aufnahmenut 5 auf, in die die Kunststoffscheibe 14 mit einem Fassungsprofil 16 versehen eingeschoben wird. Das Fassungsprofil 16 wird bezüglich der Dicke der Kunststoffscheibe 14 ausgewählt und füllt zur spielfreien Aufnahme des Flächenelements die Aufnahmenut 5 an der schmalsten Stelle vollständig aus. Wie aus Fig. 5 ersichtlich kann das Flächenelement aufgrund von Hinterschneidungen 5a, die durch zueinanderweisende, abgerundete Profilzungen 35a,b auf der Außenseite des Profilkörpers 2 gebildet sind, unter verschiedenen, bezüglich einer Profilbezugsachse 38 definierten Winkeln α in die Aufnahmenut 5 eingeschoben werden. Der Winkelbereich ist in der Fig. 5 angegeben durch einen minimalen und einen maximalen Aufnahmewinkel αₘᵢₙ bzw. αₘₐₓ. Für das Flächenelement ergibt sich ein theoretischer Drehpunkt im Profilkörper 2, der ungefähr in der Mitte zwischen den beiden abgerundeten Profilzungen 35a,b liegt und bezüglich dessen die Bodenfläche 36 gekrümmt ausgebildet ist.

In den Seitenwangen 10a,b des Rahmens wird die Kunststoffscheibe 14 mit einer Vielzahl von in den Seitenflächen der Seitenwangen 10a,b befestigten (Gummi-) Puffern 12 gegen einen Absatz 11 gedrückt und dadurch fest eingeklemmt. Die Seitenwangen 10a,b mit ihrem Absatz 11 sind derart ausgebildet, dass sich nach dem Einspannen der Kunststoffscheibe 14 eine gewölbte Kontur ergibt. Im oberen flachen Teil weist diese gewölbte Kontur einen Radius R₁ auf, während im vorderen steilen Teil ein Radius R₂ definiert ist. Zur Ausbildung eines scharfen Knickes 15 wird die Kunststoffscheibe 14 vor dem Einsetzen an dieser Stelle entsprechend abgekantet. Durch die unter Spannung stehende, gewölbte Kunststoffscheibe 14 wird die Verkleidung 1 besonders ausgesteift, so dass ein verwindungsfreies Öffnen auch von großen Verkleidungen 1 von einer Ecke aus möglich ist.

In der Fig. 2 ist die Verkleidung 1 in geöffneter Stellung dargestellt. Erkennbar sind die weiteren Anbauteile, die die Verkleidung 1 zur vormontierbaren Baueinheit komplettieren. Die Verkleidung 1 ist durch die Befestigung mit einer entsprechenden Schaftschraube 26 drehbar in zwei Tragarmen 21 aufgenommen. Zur Unterstützung der Öffnungs- und Schließbewegung beim manuellen Betätigen der Verkleidung 1 sind Gasdruckfedern 23 vorgesehen, die zwischen an den Seitenwangen 10a,b befestigten Haltern 25,30 und an den Tragarmen 21 angebrachten Haltern 22, 27 mit<3etenkköpfen 24 angelenkt sind. Am Halter 27 ist außerdem ein Sicherheitsschalter 28 befestigt, dessen zugeordneter Betätigungsbügel 29 am Halter 30 festgemacht ist.

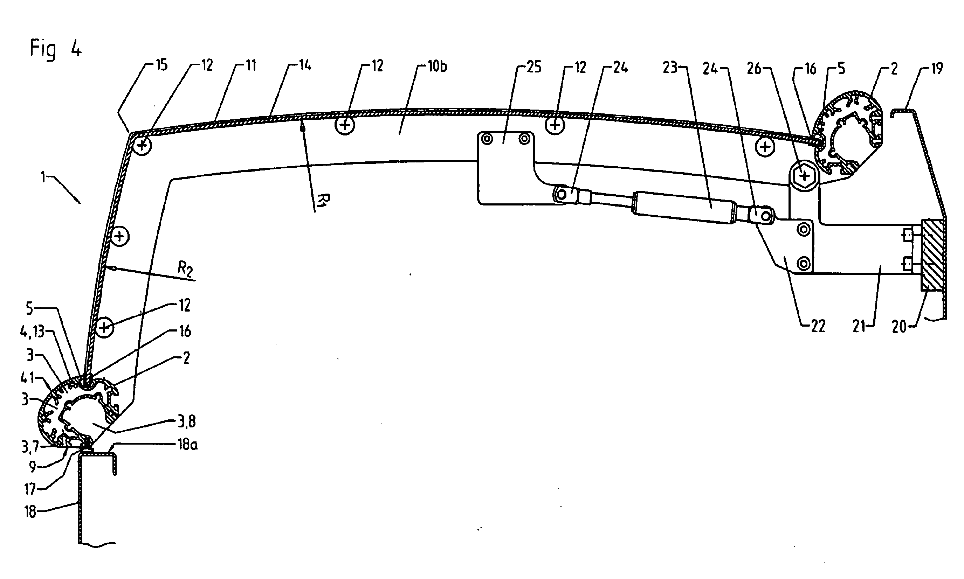

Die Schnittansicht aus Fig. 4 zeigt die Verkleidung 1 im eingebauten Zustand. Die Tragarme 21 sind an einem gestellfesten Balken 20 der Buchbindemaschine befestigt. An der Rückseite der Maschine ist ein Schutzblech 19 vorgesehen, während die Vorderseite mit einem eine Auflagefläche 18a aufweisenden Schutzblech 18 gesichert ist. Auf dieser Auflagefläche 18a stützt sich die Verkleidung 1 in ihrer Schließstellung ab und zwar mit einer an dem Profilkörper 2 ausgebildeten ebenen Anschlagfläche 9, in der eine Nut 7 vorgesehen ist zur Aufnahme eines Pufferprofils 17. Wie aus Fig. 5 ersichtlich weist der Profilkörper 2 insgesamt drei solcher Anschlagflächen 9 auf und er besitzt eine Vielzahl von Schraubkanälen 4. Hierdurch werden unterschiedlichste Verkleidungskonstruktionen ermöglicht. Über T-Nuten 6 können außerdem weitere Anbauteile an den Profilkörper 2 befestigt werden.

In der Fig. 3 ist eine steile Verkleidung 31 dargestellt. Der obere und der untere Profilkör per 2 sind im Rahmen der Verkleidung 31 in gleicher Orientierung wie bei der Verkleidung 1 ausgerichtet. Die Kontur der Verkleidung 31 wird durch den Absatz 33 der Seitenwangen 32a,b definiert. In Alternative zur Verkleidung 1 ist als Flächenelement ein Drahtgitter 34 eingesetzt worden, das im oberen Profilkörper 2 unter einem anderen Winkel α als bei der Verkleidung 1 aufgenommen ist. Am unteren Profilkörper 2 ist zum Öffnen und Schließen der Verkleidung 31 ein Handgriff vorgesehen, obgleich der Profilkörper 2 auf grund seiner halbeiförmigen Außenkontur 41 prinzipiell zum unmittelbaren Erfassen mit der durch den Daumen gegenüber den übrigen Fingern geöffneten Hand ergonomisch ausgebildet ist (siehe Fig. 4) und darüber hinaus eine Greiföffnung 8 aufweist, in die der Benutzer von unter her in den Profilkörper 2 fassen kann. Die Verkleidung 31 liegt in der Schließstellung mit der unter 45° geneigten Anschlagfläche 9 und dem zugeordneten Pufferprofil 17 an einem feststehenden Schutzblech 46 an.

Der Handgriff der Verkleidung 31 besteht aus einer Griffstange 42 und wenigstens zwei Hülsen 43, durch die Spannschrauben 44 geführt sind, die mit in einem Nutensteinkanal 40 verdrehsicher aufgenommenen Muttern 45 die Griffstange 42 mit den Hülsen 43 gegen die innere Profilwand spannen. Der Nutensteinkanal 40 ist innerhalb des Profilkörpers 2 im Abstand zum Außenprofil angeordnet und wird durch das Einbringen von entsprechenden Bohrungen nutzbar gemacht. Dabei werden zwei Profilwände durchbrochen, sodass für die Befestigung eine große Führungslänge zur Verfügung steht. Der Nutensteinkanal 40 ist in dem von außen zugänglichen Hohlraum ausgebildet, der als Greiföffnung 8 vorgesehen ist und gleichzeitig einen im Wesentlichen kreisförmigen Querschnitt 37 zur Führung eines runden Gegenstandes aufweist. Es sind weitere innenliegende Nutensteinkanäle 39 vorgesehen, die sich unmittelbar hinter dem Außenprofil befinden und durch einbringen von Bohrungen in dem Außenprofil für Befestigungen mit Klemmteilen nutzbar sind. Sie bieten dabei eine größere Befestigungssicherheit als in das Außenprofil eingebrachte Gewindebohrungen.

### Bezugszeichenliste

- **1**: Verkleidung
- **2**: Profilkörper
- **3**: Hohlraum
- **4**: Schraubkanal
- **5**: Aufnahmenut
- **5 a**: Hinterschneidung
- **6**: T-Nut
- **7**: Nut
- **8**: Greiföffnung
- **9**: Anschlagfläche
- **10 a,b**: linke, rechte Seitenwange
- **11**: Absatz
- **12**: Klemmelement
- **13**: selbstschneidende Schraube
- **14**: Kunststoffscheibe
- **15**: Knick
- **16**: Fassungsprofil
- **17**: Pufferprofil
- **18**: Schutzblech
- **18 a**: Auflagefläche
- **19**: Schutzblech
- **20**: Balken
- **21**: Tragarm
- **22**: Halter
- **23**: Gasdruckfeder
- **24**: Gelenkkopf
- **26**: Halter
- **26**: Schaftschraube
- **27**: Halter
- **28**: Sicherheitsschalter
- **29**: Betätigungsbügel
- **30**: Halter
- **31**: Verkleidung, steil
- **32 a,b**: linke, rechte Seitenwange
- **33**: Absatz
- **34**: Drahtgitter
- **35 a,b**: linke, rechte Profilzunge
- **36**: Bodenfläche
- **37**: kreisförmiger Querschnitt
- **38**: Profilbezugsachse
- **39**: Nutensteinkanal
- **40**: Nutensteinkanal
- **41**: halbeiförmige Außenkontur
- **42**: Griffstange
- **43**: Hülse
- **44**: Spannschraube
- **45**: Mutter
- **46**: Schutzblech

- **IV-IV**: Schnittverlauf für Fig. 4
- **V-V**: Schnittverlauf für Fig. 5
- **R₁**: Konturradius
- **R₂**: Konturradius
- **α**: Aufnahmewinkel für Flächenelement
- **αₘᵢₙ**: minimaler Aufnahmewinkel
- **αₘₐₓ**: maximaler Aufnahmewinkel

## Patentansprüche

1. Aus Leichtmetall bestehender Profilkörper (2) für Rahmenkonstruktionen mit mehreren longitudinalen, teilweise von der Seitenfläche des Profilkörpers zugänglichen und teilweise als Schraubkanal (4) ausgebildeten Hohlräumen (3), wobei mindestens ein Hohlraum als in Profillängsrichtung verlaufende, hinterschnittene Aufnahmenut (5) ausgebildet ist, **dadurch gekennzeichnet, dass**, zur Aufnahme eines Flächenelements (14, 34) in den Profilkörper (2) unter einem variablen, bezüglich einer Profilbezugsachse (38) definierten Winkel (α), die Aufnahmenut (5) außenseitig durch zueinanderweisende, abgerundete Profilzungen (35 a, b) eingeengt ist und eine gekrümmte Bodenfläche (36) aufweist, dessen ein oder mehrere Krümmungsmittelpunkte ungefähr in der Mitte zwischen den beiden Profilzungen (35 a, b) liegen.

2. Profilkörper nach Anspruch 1, **dadurch gekennzeichnet, dass** am Profilkörper (2) wenigstens eine ebene Außenfläche als Anschlagfläche (9) vorgesehen ist, die mit einer Längsnut (7) zur Aufnahme eines strangförmigen Pufferprofils (17) versehen ist.

3. Profilkörper nach Anspruche 1 oder 2, **dadurch gekennzeichnet, dass** ein von außen zugänglicher Hohlraum (3) des Profilkörpers (2) als mit der Hand erfassbare Greiföffnung (8) ausgebildet ist.

4. Profilkörper nach Anspruch 3, **dadurch gekennzeichnet, dass** der Hohlraum (3, 8) einen im Wesentlichen kreisförmigen Querschnitt (37) aufweist zur Führung eines runden Gegenstandes.

5. Profilkörper nach einem der Ansprüche 1 bis 4, **gekennzeichnet durch** wenigstens einen innerhalb des Profilkörpers (2) angeordneten und unmittelbar hinter dem Außenprofil liegenden Nutensteinkanal (39), der **durch** Einbringen von Bohrungen in den Profilkörper (2) für Befestigungen am Profilkörper (2) nutzbar ist.

6. Profilkörper nach einem der Ansprüche 1 bis 5, **gekennzeichnet durch** einen innerhalb des Profilkörpers (2) angeordneten und zum Außenprofil beabstandeten Nutensteinkanal (40), der mit dem Anbohren wenigstens zweier Profilwände eine vergrößerte Führungslänge für Befestigungen am Profilkörper (2) darbietet.

7. Profilkörper nach Anspruch 6, **dadurch gekennzeichnet, dass** der Nutensteinkanal (40) in einem von außen zugänglichen Hohlraum (3,8) ausgebildet ist.

8. Profilkörper nach einem der Ansprüche 1 bis 7, **gekennzeichnet durch** eine im Teilbereich halbeiförmige, mit der Hand erfassbare Außenkontur (41).

9. Verkleidung (1, 31) für eine Bearbeitungsmaschine, z.B. eine Buchbindemaschine, mit einem im Maschinengestell verschieb- oder schwenkbar gelagerten oder fest damit verbundenen Rahmen, der gebildet ist aus einem oberen und einem unteren Profilkörper (2) nach einem der Ansprüche 1 bis 8 und aus linken und rechten Seitenwangen (10a,b, 32a,b), die an den offenen Stirnseiten des Profilkörpers (2) durch Eindrehen von selbstschneidenden Schrauben (13) in den Schraubkanälen (4) befestigt sind, und mit einem Flächenelement (14, 34) aus Blech, transparentem Kunststoff, Drahtgitter o. dgl., das in dem Rahmen eingesetzt ist unter Aufnahme der oberen und unteren Randbereiche in der Aufnahmenut (5) der beiden Profilkörper (2), wobei die seitlichen Randbereiche des Flächenelements (14, 34) zwischen einem in der Seitenwange (10a,b, 32a,b) ausgebildeten Absatz (11, 33) und wenigstens einem punktuell angeordneten, elastischen Klemmelement (12) in den Seitenwangen (10a,b, 32a,b) eingespannt sind.

10. Verkleidung nach Anspruch 9, **dadurch gekennzeichnet, dass** mehrere, in ungefähr gleichen gegenseitigen Abständen zueinander angeordnete Klemmelemente (12) in einer Seitenwange (10a,b, 32a,b) vorgesehen sind.

11. Verkleidung nach Anspruch 9 oder 10, **dadurch gekennzeichnet, dass** das Klemmelement ein runder Puffer (12) ist, der mit seiner Mantelfläche gegen das Flächenelement (14, 34) drückt und stirnseitig an der innenliegenden Seitenfläche der Seitenwange (10a,b, 32a,b) befestigt ist

12. Verkleidung nach einem der Ansprüche 9 bis 11, **dadurch gekennzeichnet, dass** die in der Aufnahmenut (5) des Profilkörpers (2) aufgenommenen Randbereiche des Flächenelements (14, 34) mit einem elastischen Fassungsprofil (17) versehen sind.

13. Verkleidung nach einem der Ansprüche 9 bis 12, **dadurch gekennzeichnet, dass** die Verkleidung (1, 31) gewölbt ausgebildet ist, wobei die Wölbung des an sich ebenen Flächenelements (14, 34) nach dem Einsetzen in den Rahmen durch die Kontur des Absatzes (11, 33) in den Seitenwangen (10a,b, 32a,b) definiert ist.

14. Verkleidung nach Anspruch 13, **dadurch gekennzeichnet, dass** die Verkleidung (1) einen oder mehrere Knicke (15) aufweist, dass das eingesetzte Flächenelement (14) in den Knickstellen abgekantet ist und dass wenigstens eine der durch die Knicke gebildeten Teilflächen des Flächenelements (14) nach dem Einsetzen in den Rahmen gewölbt ausgebildet ist.

15. Verkleidung nach Anspruch 13 oder 14, **dadurch gekennzeichnet, dass** die Wölbung einen Radius (R1, R2) beschreibt.

## Claims

1. A light metal profile member (2) for frames constructions with several longitudinal cavities (3) that are in part accessible from the lateral surface of the profile member and in part realized in the form of a screw channel (4), wherein at least one cavity is realized in the form of an undercut receptacle groove (5) that extends in the longitudinal direction of the profile, **characterized in that** the receptacle groove (5) is constricted on its outer side by means of rounded profile tabs (35a, b) in order to accommodate a surface element (14, 34) in the profile member (2) at a variable angle (α) that is defined relative to a profile reference axis (38), and **in that** the receptacle groove features a curved bottom surface (36), the one or more centers of curvature of which approximately lie in the center between the two profile tabs (35a, b).

2. The profile member according to Claim 1, **characterized in that** at least one stopping surface (9) in the form of a plane outer surface is arranged on the profile member (2) and provided with a longitudinal groove (7) in order to accommodate a strand-shaped buffer profile (17).

3. The profile member according to Claim 1 or 2, **characterized in that** an externally accessible cavity (3) of the profile member (2) is realized in the form of a grip opening (8) that can be taken hold of with the hand.

4. The profile member according to Claim 3, **characterized in that** the cavity (3, 8) has an essentially circular cross section (37) in order to guide a round object.

5. The profile member according to one of Claims 1 to 4, **characterized in** at least one sliding block channel (39) that is arranged within the profile member (2) and lies directly behind the outer profile, wherein said sliding block channel can be used for mountings on the profile member (2) by producing bores in the profile member (2).

6. The profile member according to one of Claims 1 to 5, **characterized in** a sliding block channel (40) that is arranged within the profile member (2) in spaced apart from the outer profile, wherein said sliding block channel provides an increased guiding length for mountings on the profile member (2) due to the spot boring of at least two profile walls.

7. The profile member according to Claim 6, **characterized in that** the sliding block channel (40) is realized in an externally accessible cavity (3, 8).

8. The profile member according to one of Claims 1 to 7, **characterized in** a semi-ovate outer contour (41) in the partial area which can be taken hold of with the hand.

9. A fairing (1, 31) for a processing machine, e.g., a book binding machine, with a frame that is supported in a chassis in a displaceable or pivoted fashion or rigidly connected thereto, wherein said frame is composed of an upper and a lower profile member (2) according to one of Claims 1 to 8 and of left and right sidewalls (10a, b, 32a, b) that are mounted on the open end faces of the profile member (2) by screwing self-tapping screws (13) into the screw channels (4), and with a surface element (14, 34) of sheet metal, transparent plastic, wire mesh or the like that is inserted into the frame such that the upper and lower edge regions are accommodated in the receptacle groove (5) of the two profile members (2), wherein the lateral edge regions of the surface element (14, 34) are clamped between a shoulder (11, 33) that is realized in the sidewall (10a, b, 32a, b) and at least one elastic clamping element (12) in the side walls (10a, b, 32a, b) which is arranged in a punctiform fashion.

10. The fairing according to Claim 9, **characterized in that** several clamping elements (12) are provided in a sidewall (10a, b, 32a, b) such that they are approximately spaced apart from one another by identical distances.

11. The fairing according to Claim 9 or 10, **characterized in that** the clamping element consists of a round buffer (12) that presses against the surface element (14, 34) with its outer surface and the end face of which is mounted on the inner lateral surface of the sidewall (10a, b, 32a, b).

12. The fairing according to one of Claims 9 to 11, **characterized in that** the edge regions of the surface element (14, 34) which are accommodated in the receptacle groove (5) of the profile member (2) are provided with an elastic mounting profile (17).

13. The fairing according to one of Claims 9 to 12, **characterized in that** the fairing (1, 31) is realized in an arched fashion, wherein the arch of the generally plane surface element (14, 34) is defined by the contour of the shoulder (11, 33) in the sidewalls (10a, b, 32a, b) after the insertion into the frame.

14. The fairing according to Claim 13, **characterized in that** the fairing (1) features one or more bends (15), **in that** the inserted surface element (14) is beveled in the bending points, and **in that** at least one of the partial areas of the surface element (14) formed by the bends is realized in an arched fashion after the insertion into the frame.

15. The fairing according to Claim 13 or 14, **characterized in that** the arch describes a radius (R1, R2).

## Revendications

1. Elément profilé (2) composé de métal léger pour des constructions à cadres comprenant plusieurs cavités (3) longitudinales, accessibles partiellement depuis le côté de l'élément profilé et formées partiellement comme canal de vissage (4), au moins une cavité étant formée comme gorge de réception (5) en contre-dépouille s'étendant dans la direction longitudinale du profilé, **caractérisé en ce que** pour recevoir un élément plan (14, 34) dans l'élément profilé (2) dans un angle variable, défini par rapport à un axe de référence du profilé (38) (α), la gorge de réception (5) est rétrécie à l'extérieur par des languettes de profilé (35 a, b) arrondies dirigées l'une vers l'autre et présente une surface de sol incurvée (36) dont l'un ou plusieurs points centraux de courbure sont placés environ au centre entre les deux languettes de profilé (35 a, b).

2. Elément profilé selon la revendication 1, **caractérisé en ce que** sur l'élément profilé (2) au moins une face extérieure plane est prévue comme face de butée (9) qui est munie d'une rainure longitudinale (7) prévue pour recevoir un profilé tampon (17) en forme de boudin.

3. Elément profilé selon la revendication 1 ou 2, **caractérisé en ce qu'**une cavité (3) accessible depuis l'extérieur de l'élément profilé (2) est conçue comme une ouverture de préhension (8) pouvant être saisie manuellement.

4. Elément profilé selon la revendication 3, **caractérisé en ce que** la cavité (3, 8) présente une section transversale (37) essentiellement circulaire pour guider un objet rond.

5. Elément profilé selon l'une des revendications 1 à 4, **caractérisé par** au moins un canal à coulisseau (39) disposé à l'intérieur de l'élément profilé (2) et reposant directement derrière le profilé extérieur qui peut être utilisé par l'introduction de perçages dans l'élément profilé (2) pour être fixé sur l'élément profilé (2).

6. Elément profilé selon l'une des revendications 1 à 5, **caractérisé par** un canal à coulisseau (40) disposé à l'intérieur de l'élément profilé (2) et à distance du profilé extérieur, qui avec le perçage d'au moins deux parois de profilé, offre une longueur de guidage agrandie pour être fixé sur l'élément profilé (2).

7. Elément profilé selon la revendication 6, **caractérisé en ce que** le canal à coulisseau (40) est formé dans une cavité (3,8) accessible de l'extérieur.

8. Elément profilé selon l'une des revendications 1 à 7, **caractérisé par** un contour extérieur (41) pouvant être saisi manuellement convexe.

9. Capotage (1,31) de machine de traitement, par exemple une machine à relier comprenant un cadre placé de manière mobile ou pivotant dans un bâti de la machine ou fixé à celui-ci qui est formé d'éléments profilés (2) supérieur et inférieur selon l'une des revendications 1 à 8 et de faces latérales gauche et droite (10a,b, 32a,b) qui sont fixées sur les faces frontales ouvertes de l'élément profilé (2) par la rotation de vis auto-taraudeuses (13) dans les canaux à coulisseau (4) et avec un élément plan (14, 34) en tôle, plastique transparent, grillage métallique ou similaire, intégré dans le cadre par réception des zones de bord supérieure et inférieure dans la gorge de réception (5) des deux éléments profilés (2), les zones de bord latérales (10a,b, 32a,b) de l'élément plan (14, 34) étant serrées entre une butée (11, 33) formée dans la face latérale (10a,b, 32a,b) et au moins un élément de serrage (12) élastique placé de manière ponctuelle dans les faces latérales (10a,b, 32a,b).

10. Capotage selon la revendication 9, **caractérisé en ce que** plusieurs éléments de serrage (12) disposés à distances opposées environ égales entre eux sont prévus dans une face latérale (10a,b, 32a,b).

11. Capotage selon la revendication 9 ou 10, **caractérisé en ce que** l'élément de serrage est un tampon rond (12) qui appuie avec sa surface d'enveloppe contre l'élément plan (14, 34) et est fixé sur sa face frontale à la face latérale intérieure de la paroi latérale (10a,b, 32a,b).

12. Capotage selon l'une des revendications 9 à 11, **caractérisé en ce que** les zones de bord de l'élément plan (14, 34) reçues dans la gorge de réception (5) de l'élément profilé (2) sont munies d'un profilé de pose (17) élastique.

13. Capotage selon l'une des revendications 9 à 12, **caractérisé en ce que** le capotage (1, 31) est bombé, le bombement de l'élément plan en soi (14, 34) étant défini après l'insertion dans le cadre par le contour de la butée (11, 33) dans les faces latérales (10a,b, 32a,b).

14. Capotage selon la revendication 13, **caractérisé en ce que** le capotage (1) présente un ou plusieurs fléchissements (15), que l'élément plan (14) inséré est chanfreiné dans les points de fléchissement et qu'au moins une des faces partielles de l'élément plan (14) formées par les fléchissements est bombée après l'introduction dans le cadre.

15. Capotage selon la revendication 13 ou 14, **caractérisé en ce que** le bombement décrit un rayon (R1, R2).
